# EUROPÄISCHE PATENTANMELDUNG

(11) **EP 3 309 326 A1**
(43) Veröffentlichungstag der Anmeldung: **18.04.2018**
(21) Anmeldenummer: 16193888.1
(22) Anmeldetag: 14.10.2016
(51) Int. Cl.: E04G 21/04, G05D 15/00, B66C 13/06, E02F 9/00

(54) **VERFAHREN UND VORRICHTUNG ZUR BEWEGUNGSSTEUERUNG EINES BETONVERTEILERMASTS**

(71) Anmelder: Putzmeister Engineering GmbH, 72631 Aichtal (DE)
(72) Erfinder: Huth, Tobias, 72622 Nürtingen (DE); MÜLLER, Ansgar, 70184 Stuttgard (DE)
(74) Vertreter: Pfiz, Thomas

(57) **Zusammenfassung**

Die Erfindung betrifft ein Verfahren und eine Vorrichtung zur Bewegungssteuerung eines Betonverteilermasts, der an seiner Mastbasis an einem Drehwerk (14) um eine vertikale Drehachse drehbar gelagert ist, wobei das Drehwerk (14) mittels eines Drehantriebs (20) und gegebenenfalls einer Bremse (22) betätigt wird, um den Mast (12) in eine gewünschte Winkelstellung zu bringen, und wobei beim Beschleunigen und/oder Verzögern eine unerwünschte Eigenschwingung des Masts (12) in horizontaler Richtung auftreten kann. Erfindungsgemäß wird vorgeschlagen, dass der Drehantrieb (20) im Bereich mindestens eines Schwingungsmaximums der Eigenschwingung zeitweise in einen Freilauf geschaltet wird, so dass das Drehwerk (14) frei beweglich ist und die Eigenschwingung reduziert wird.

## Beschreibung

Die Erfindung betrifft ein Verfahren zur Bewegungssteuerung eines Betonverteilermasts, der an seiner Mastbasis an einem Drehwerk um eine vertikale Drehachse drehbar gelagert ist, wobei das Drehwerk mittels eines Drehantriebs und gegebenenfalls einer Bremse betätigt wird, um den Mast in eine gewünschte Winkelstellung zu bringen, wobei beim Beschleunigen und/oder Verzögern eine unerwünschte Eigenschwingung des Masts in horizontaler Richtung auftreten kann. Die Erfindung betrifft weiter eine zur Ausführung eines solchen Verfahrens eingerichtete Vorrichtung.

Bei derzeit eingesetzten Autobetonpumpen werden zur Drehung des Betonverteilermasts Joystick-Steuerungen eingesetzt, mit denen der Bediener eine Bewegungsänderung vorgibt, die von der Joystickauslenkung abhängt. Zu Beginn der Drehbewegung verharrt die Mastspitze aufgrund Massenträgheit zunächst an ihrer ursprünglichen Position, während sich das Drehwerk bereits dreht. Der Verteilermast wird somit vorgespannt. Erst mit einer gewissen Zeitverzögerung beginnt sich die Mastspitze abrupt zu bewegen. Dies führt zu ungewollten peitschenden Schwingungen des gesamten Verteilermastes. Auch der

Unterbau kann dadurch zu Schwingungen angeregt werden. Beim Bremsvorgang ist das gleiche Verhalten zu beobachten. Im Zuge von immer leichter, und somit meist biegeweicher, werdenden Bauteilen nehmen solche Schwingungen zu. Dadurch wird wiederum die Arbeit in der Nähe solcher Kragstrukturen erschwert und die Gefährdung vor allem für den Endschlauchführer an der Betonierstelle steigt.

Ausgehend hiervon liegt der Erfindung die Aufgabe zugrunde, die im Stand der Technik bekannten Verfahren und Vorrichtungen weiter zu verbessern und ungewollte Mastschwingungen, die durch Anfahr-/ Abbremsvorgänge induziert werden, zu reduzieren bzw. zu vermeiden.

Zur Lösung dieser Aufgabe wird die im Patentanspruch 1 bzw. 13 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, den Wechsel von potentieller und kinetischer Energie bei Bewegungsänderungen der Maststruktur für eine Steuerung der Mastspitze geschickt zu nutzen. Dementsprechend wird in verfahrensmäßiger Hinsicht vorgeschlagen, dass der Drehantrieb im Bereich mindestens eines Amplitudenmaximums der Eigenschwingung zeitweise in einen Freilauf geschaltet wird, so dass das Drehwerk drehmomententlastet ist bzw. kein Drehmoment überträgt und dabei für eine vorgegebene Zeitdauer frei beweglich ist. Damit lassen sich Eigenschwingungen des Masts ohne tiefgreifenden mechanischen Aufwand weitgehend reduzieren. Eine solche Bewegungssteuerung kann unabhängig vom aktuellen Bewegungszustand bei allen Beschleunigungs- und Bremsvorgängen eingesetzt werden. Zweckmäßig wird ein hydraulischer oder ein elektrischer Drehantrieb eingesetzt.

Eine vorteilhafte Ausgestaltung des Steuerungsablaufes sieht vor, dass der Einschaltzeitpunkt für den Freilauf nach Maßgabe eines bei der Drehbewegung erfassten Messwerts bestimmt wird.

Eine weitere Verbesserung in diesem Zusammenhang ergibt sich dadurch, dass der Drehantrieb zum Zeitpunkt des Auftretens eines Extremwerts des an dem Drehwerk anliegenden Drehmoments in den Freilauf geschaltet wird. In diesem Zeitpunkt besitzt das schwingungsfähige System seine maximale potentielle Energie und somit seine minimale kinetische Energie.

Eine sensorgesteuerte Variante sieht vor, dass das Drehmoment an dem Drehwerk mittels eines Drehmomentgebers, insbesondere mittels einer Dehnungsmessung (beispielsweise mittels Dehnmessstreifen) sensorisch erfasst wird.

Im Zusammenhang mit einem Drehantrieb, der durch einen Hydromotor gebildet wird, ist es besonders vorteilhaft, wenn der Einschaltzeitpunkt für den Freilauf aus dem Verlauf eines an dem Hydromotor anliegenden, sensorisch erfassten Hydraulikdrucks oder einer davon abgeleiteten Größe ermittelt wird.

Dabei kann potentielle Energie gezielt umgesetzt werden, indem der Hydromotor für den Freilauf vorzugsweise über ein Schaltventil durch Verbinden seiner Druckanschlüsse hydraulisch kurzgeschlossen wird.

Eine weitere vorteilhafte Variante sieht vor, dass der Freilauf nach einem Steuersignal für das Beschleunigen und/oder Verzögern des Masts zeitgesteuert ausgelöst wird.

Bei einem zeitgesteuerten Ablauf ist es besonders günstig, wenn der Freilauf in Abhängigkeit von der Eigenschwingdauer des Masts vorzugsweise nach Ablauf eines Viertels der Eigenschwingdauer nach dem Steuersignal eingeschaltet wird.

Um ein "Weglaufen" des Masts zu vermeiden, sollte der Freilauf nach einer vorgegebenen Zeitdauer nach dem Einschalten deaktiviert werden. Eine solche Maßnahme ist auch aus Sicherheitsgründen vorteilhaft.

Hierbei ist es möglich, dass die Zeitdauer des Freilaufs empirisch ermittelt wird, derart, dass eine Eigenschwingung des Masts minimiert wird.

In jedem Fall sollte sichergestellt sein, dass die Bremse zumindest für die Zeitdauer des Freilaufs gelöst bzw. gelüftet bleibt.

Gegenstand der Erfindung ist auch eine Vorrichtung zur Bewegungssteuerung eines Betonverteilermasts, mit einem Drehwerk an der Mastbasis, das um eine vertikale Drehachse drehbar gelagert ist, wobei das Drehwerk mittels eines Drehantriebs und gegebenenfalls einer Bremse betätigbar ist, wobei beim Beschleunigen und/oder Verzögern eine unerwünschte Eigenschwingung des Masts in horizontaler Richtung auftreten kann, wobei der Drehantrieb durch eine Steuereinrichtung im Bereich mindestens eines Schwingungsmaximums der Eigenschwingung zeitweise in einen Freilauf schaltbar ist, so dass das Drehwerk während des Freilaufs frei beweglich ist und die Schwingung des Masts minimiert wird. Damit werden die eingangs im Zusammenhang mit einem Steuerverfahren aufgeführten Vorteile gleichermaßen erreicht.

Im Folgenden wird die Erfindung anhand des in der Zeichnung schematisch dargestellten Ausführungsbeispiels näher erläutert. Es zeigen:
- Fig. 1: eine symbolische Darstellung eines Betonverteilermasts an einer Autobetonpumpe;
- Fig. 2: ein Blockschaltbild einer Drehwerksteuerung für den Betonverteilermast;
- Fig. 3: verschiedene Zeitdiagramme des Steuerungsablaufs;
- Fig. 4: einen Vergleich der Mastschwingung für die erfindungsgemäße und eine herkömmliche Bewegungssteuerung.

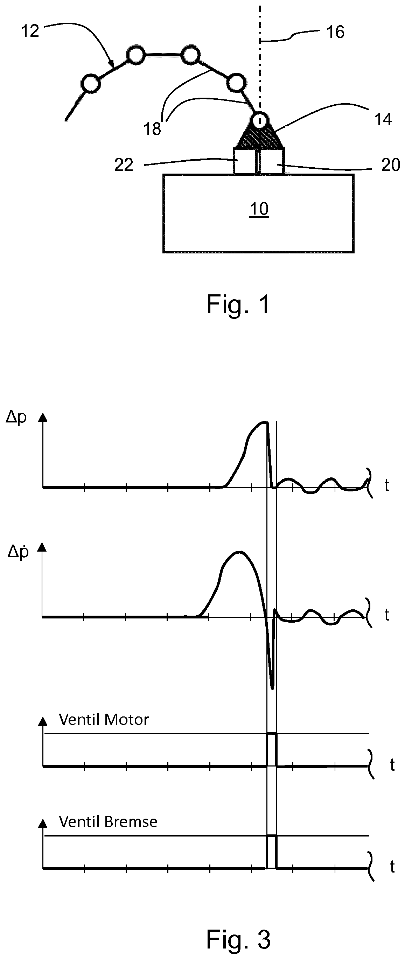

Fig. 1 symbolisiert eine Autobetonpumpe 10 mit einem eine nicht gezeigte Betonleitung führenden Betonverteilermast 12, der an seiner Basis mittels eines Drehwerks 14 um eine Hochachse 16 drehbar ist und aus mehreren Mastarmen 18 zusammengesetzt ist, die über Gelenke mit horizontalen Drehachsen miteinander bzw. mit dem Drehwerk verbunden sind. Den Gelenken sind nicht gezeigte Hydrozylinder als Schwenkantriebe zugeordnet, während das Drehwerk 14 über einen Hydromotor 20 angetrieben und mittels einer Bremse 22 abbremsbar ist, wie es nachstehend näher erläutert wird. Dadurch lässt sich der Mast 12 in eine gewünschte Dreh- bzw. Winkelstellung verfahren, während der radiale Abstand der Mastspitze von der Hochachse 16 durch Schwenkbewegung der Gelenke veränderlich ist, um den über die Betonleitung geförderten Beton am Arbeitsort auszubringen.

Beim konventionellen Beschleunigen (sowohl Anfahren als auch Bremsen) des Masts 12 treten unerwünschte Schwingungen in horizontaler Richtung um die Hochachse 16 auf. Die Ursache dieser Schwingungen liegt zum einen in der geringen Federsteifigkeit (und damit verbundenen kleinen Eigenfrequenzen) und zum anderen der geringen Gesamtdämpfung des Masts 12. Dabei können große Schwingungsamplituden auftreten, die nur langsam abklingen. Solche Schwingungen lassen sich durch eine nachstehend beschriebene Drehwerksteuerung weitgehend unterdrücken.

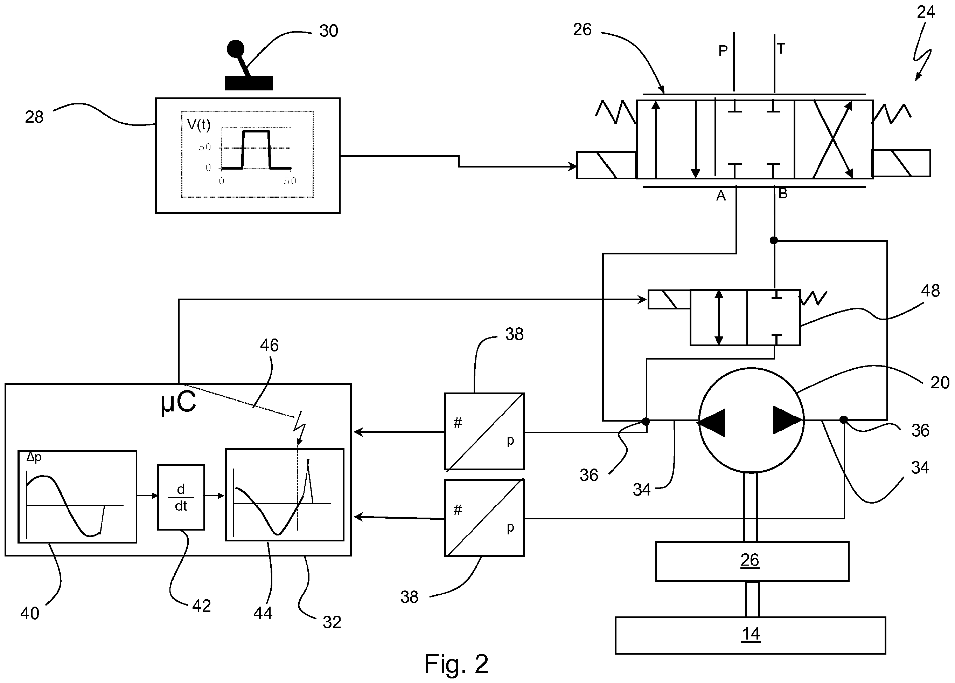

Fig. 2 zeigt ein Blockschaltbild einer rechnergestützten Steuereinrichtung 24 für den Drehantrieb 20, der als Hydromotor ausgebildet ist und über ein Untersetzungsgetriebe 26 mit dem Drehwerk 14 gekoppelt ist. Die Steuereinrichtung 24 umfasst ein elektrisch angesteuertes Proportional-Wegeventil 26, das sich von einem Bediener mittels Eingabeeinrichtung 28 ansteuern lässt. Dies kann dadurch erfolgen, dass durch Schwenken eines Joysticks 30 eine Zielgeschwindigkeit manuell vorgegeben wird. Die Druckölausgänge A und B des Proportionalventils 26 lassen sich in dessen von der Mittelstellung abweichenden Durchflussstellungen mit stetigem Übergang der Ventilöffnung richtungsabhängig auf den Drehantrieb 20 aufschalten. Auf diese Weise wird die Drehgeschwindigkeit nach Betrag und Richtung zeitabhängig vorgegeben.

Weiterhin verfügt die Steuereinrichtung 24 über einen Mikrocontroller 32 zur schwingungsminimierenden Aktivierung eines Freilaufs des Drehantriebs 20. Zu diesem Zweck ist an den beiden Druckanschlüssen 34 des Drehantriebs 20 jeweils ein Drucksensor 36 vorgesehen, der über einen nachgeordneten Analog/Digital-Wandler 38 ein digitales, zeitabhängig erfassbares Drucksignal 40 an den Mikrocontroller 32 liefert. Dieser enthält einen Differenzierer 42, um aus dem Druckdifferenzsignal 40 einen zeitlich abgeleiteten Verlauf 44 der Druckdifferenz Δp zu generieren.

Der Mikrocontroller 32 besitzt eine Schaltstufe 46, die ein elektrisches Schaltsignal auf den Steuereingang eines als 2/2-Wegeventil ausgebildeten Schaltventils 48 ausgibt. Dieses sperrt in seiner federrückgestellten Grundstellung und gibt in seiner elektrisch betätigten Einschaltstellung den Durchflussweg in beide Richtungen frei, so dass die Druckanschlüsse des Drehantriebs 20 miteinander verbunden werden. Durch diesen hydraulischen Kurzschluss wird der Drehantrieb 20 in einen Freilauf geschaltet, in welchem er kein Drehmoment überträgt und somit frei beweglich ist.

Fig. 3 veranschaulicht den Steuerungsablauf für ein schwingungsarmes Beschleunigen des Masts 12. Dessen Massenträgheit führt beim Beschleunigen zu einer Vorspannung des Drehwerks 14, die sich in einem Anstieg des Differenzdrucksignals 40 wiederspiegelt. Der Extremwert des Differenzdrucks Δp tritt zum Zeitpunkt des Nulldurchgangs des zeitlich abgeleiteten Signals 44 auf. In diesem Zeitpunkt wird das Ventil 48 auf Durchfluss geschaltet, so dass der Drehantrieb 20 drehmomententlastet wird und somit frei beweglich ist. Wie in dem dritten Diagramm gezeigt, wird das Ventil 48 nach einer vorgegebenen Zeitdauer wieder gesperrt, was zu einer Deaktivierung des Freilaufs führt. Parallel dazu wird auch die Bremse 22 für die Dauer des Freilaufs gelüftet (unteres Diagramm in Fig. 3). Die Aktivierungsdauer kann empirisch bzw. experimentell für eine gegebene Mastkonfiguration bestimmt werden, so dass auftretende Schwingungen minimiert werden.

Der beschriebene Vorgang lässt sich auch beim Abbremsen des Masts 12 entsprechend wiederholen. Anstelle eines Differenzdrucks kann auch das an dem Drehwerk 14 anliegende Drehmoment beispielsweise mittels Dehnmessstreifen sensorisch erfasst werden, um daraus einen analogen Steuerungsablauf abzuleiten.

Denkbar ist es auch, dass der Freilauf in einem Zeitabstand nach einem mittels des Joysticks 30 ausgelösten Fahrsignals zeitgesteuert ausgelöst wird. Für die zeitgesteuerte Variante sollte die Eigenfrequenz bekannt sein. Die Zeitdauer zwischen Beschleunigungs- bzw. Bremsbeginn und dem Zeitpunkt, in dem der Drehantrieb 20 momentenfrei geschalten wird, sollte möglichst genau 1/4 der Eigenschwingdauer entsprechen. Diese Variante ist ohne zusätzliche Sensorik am Drehwerk 14 realisierbar. Jedoch sollten zur Bestimmung der Eigenfrequenz in der benötigten Genauigkeit geeignete Mastsensoren insbesondere für die Winkelstellung der Mastarme 18 vorhanden sein.

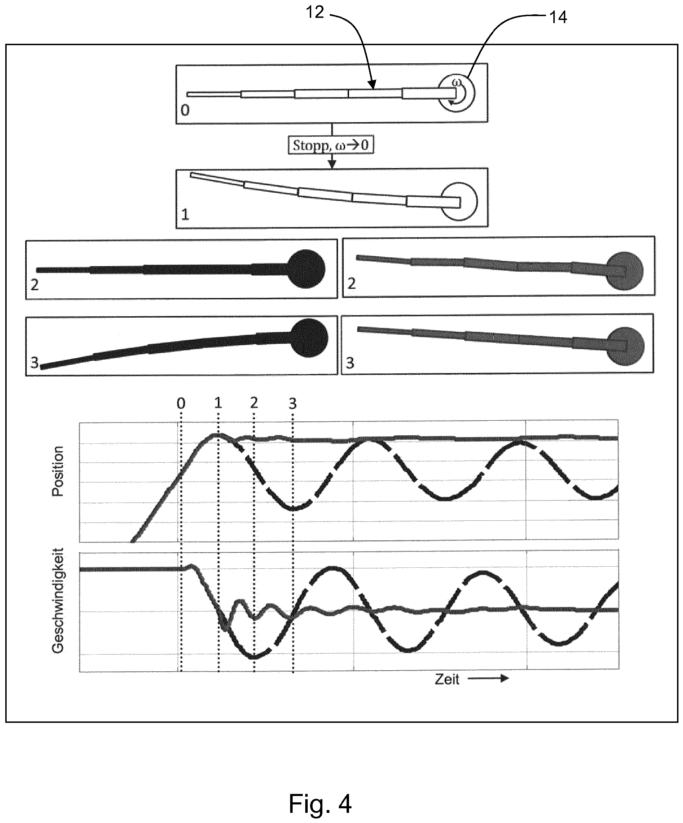

Die schwingungsoptimierte Steuerung ist in Fig. 4 am Beispiel des Stoppens der Mastbewegung weiter illustriert. Aus einer stetigen Bewegung (Zeitpunkt 0 in vertikaler Draufsicht auf den Mast 12) heraus wird der Drehantrieb 20 gestoppt. Im Zustand maximaler potentieller Energie (Zeitpunkt 1) wird das vorgespannte Drehwerk 14 so manipuliert, dass diesem Energiezustand die Grundlage entzogen wird und das schwingungsfähige System sich durch den Freilauf in sich selbst entspannt (Zeitpunkt 2 in Fig. 4, rechte Seite). Danach steht der Mast 12 so gut wie still (Zeitpunkt 3 in Fig. 4, rechte Seite). Der Drehantrieb 20 kann dann wieder blockiert werden.

In der schaltungstechnischen Umsetzung bedeutet dies, dass der Drehantrieb 20 gezielt in den Freilauf geschalten wird, wenn der Mast 12 in seiner Schwingung gerade stillsteht bzw. umkehrt. Bei der herkömmlichen Maststeuerung durch eine steile Bremsrampe schwingt der Mast über, wie es für den Zeitpunkt 2 und 3 in der linken Seite der Fig. 4 dargestellt ist. Entsprechend zeigen die beiden unteren Zeitdiagramme den zeitlichen Verlauf der Position und Geschwindigkeit der Mastspitze für die erfindungsgemäße schwingungsarme Bewegungssteuerung (durchgezogene Linien) im Vergleich zu einer zu unerwünschten Schwingungen führenden herkömmlichen Bremsrampe (unterbrochene Linien), wobei auch hier die Zeitpunkte 0 bis 3 markiert sind.

## Patentansprüche

1. Verfahren zur Bewegungssteuerung eines Betonverteilermasts, der an seiner Mastbasis an einem Drehwerk (14) um eine vertikale Drehachse drehbar gelagert ist, wobei das Drehwerk (14) mittels eines Drehantriebs (20) und gegebenenfalls einer Bremse (22) betätigt wird, um den Mast (12) in eine gewünschte Winkelstellung zu bringen, wobei beim Beschleunigen und/oder Verzögern eine unerwünschte Eigenschwingung des Masts (12) in horizontaler Richtung auftreten kann, **dadurch gekennzeichnet, dass** der Drehantrieb (20) im Bereich mindestens eines Schwingungsmaximums der Eigenschwingung zeitweise in einen Freilauf geschaltet wird, so dass das Drehwerk (14) frei beweglich ist und die Eigenschwingung reduziert wird.

2. Verfahren nach Anspruch 1, **dadurch gekennzeichnet, dass** der Einschaltzeitpunkt für den Freilauf nach Maßgabe eines bei der Drehbewegung erfassten Messwerts bestimmt wird.

3. Verfahren nach Anspruch 1 oder 2, **dadurch gekennzeichnet, dass** der Drehantrieb (20) zum Zeitpunkt des Auftretens eines Extremwerts des an dem Drehwerk (14) anliegenden Drehmoments in den Freilauf geschaltet wird.

4. Verfahren nach einem der Ansprüche 1 bis 3,
**dadurch gekennzeichnet, dass** das Drehmoment an dem Drehwerk (14) mittels eines Drehmomentgebers, insbesondere mittels einer Dehnungsmessung sensorisch erfasst wird.

5. Verfahren nach einem der Ansprüche 1 bis 4,
**dadurch gekennzeichnet, dass** der Drehantrieb (20) durch einen Hydromotor gebildet wird.

6. Verfahren nach Anspruch 5, **dadurch gekennzeichnet, dass** der Einschaltzeitpunkt für den Freilauf aus dem Verlauf eines an dem Hydromotor anliegenden, sensorisch erfassten Hydraulikdrucks oder einer davon abgeleiteten Größe ermittelt wird.

7. Verfahren nach Anspruch 5 oder 6, **dadurch gekennzeichnet, dass** der Hydromotor für den Freilauf vorzugsweise über ein Schaltventil (48) durch Verbinden seiner Druckanschlüsse (34) hydraulisch kurzgeschlossen wird.

8. Verfahren nach Anspruch 1, **dadurch gekennzeichnet, dass** der Freilauf nach einem Steuersignal für das Beschleunigen und/oder Verzögern des Masts (12) zeitgesteuert ausgelöst wird.

9. Verfahren nach Anspruch 8, **dadurch gekennzeichnet, dass** der Freilauf in Abhängigkeit von der Eigenschwingdauer des Masts (12) vorzugsweise nach Ablauf eines Viertels der Eigenschwingdauer nach dem Steuersignal eingeschaltet wird.

10. Verfahren nach einem der Ansprüche 1 bis 9,
**dadurch gekennzeichnet, dass** der Freilauf nach einer vorgegebenen Zeitdauer nach dem Einschalten deaktiviert wird.

11. Verfahren nach Anspruch 10, **dadurch gekennzeichnet, dass** die Zeitdauer des Freilaufs empirisch ermittelt wird, derart, dass eine Eigenschwingung des Masts (12) minimiert wird.

12. Verfahren nach einem der Ansprüche 1 bis 10,
**dadurch gekennzeichnet, dass** die Bremse (22) zumindest für die Zeitdauer des Freilaufs gelöst bleibt.

13. Vorrichtung zur Bewegungssteuerung eines Betonverteilermasts, mit einem Drehwerk (14) an der Mastbasis, das um eine vertikale Drehachse drehbar gelagert ist, wobei das Drehwerk (14) mittels eines Drehantriebs (20) und gegebenenfalls einer Bremse (22) betätigbar ist, wobei beim Beschleunigen und/oder Verzögern eine unerwünschte Eigenschwingung des Masts (12) in horizontaler Richtung auftreten kann, **dadurch gekennzeichnet, dass** der Drehantrieb (20) durch eine Steuereinrichtung (24) im Bereich mindestens eines Schwingungsmaximums der Eigenschwingung zeitweise in einen Freilauf schaltbar ist, so dass das Drehwerk (14) frei beweglich ist und die Eigenschwingung reduziert wird.
